# FASCICULE DE BREVET EUROPEEN

(11) **EP 4 380 779 B1**
(45) Date de publication et mention de la délivrance du brevet: **16.07.2025**
(21) Numéro de dépôt: 22760759.5
(22) Date de dépôt: 28.07.2022
(51) Int. Cl.: B29C 53/58, B29C 53/62, B29C 53/68, B29C 53/80

(54) **MACHINE D'ENROULEMENT FILAMENTAIRE AVEC SUPPORT TOURNANT À PLUSIEURS TÊTES D'ENROULEMENT**
FILAMENTWICKELMASCHINE MIT EINEM EINE MEHRZAHL VON WICKELKÖPFEN AUFWEISENDEN ROTIERENDEN TRÄGER
FILAMENT WINDING MACHINE WITH A ROTATING SUPPORT HAVING A PLURALITY OF WINDING HEADS

(30) Priorité: 02.08.2021 FR 2108411
(43) Date de publication de la demande: 12.06.2024
(73) Titulaire: MF Tech, 56530 Quéven (FR)
(72) Inventeur: FLOUVAT, Emmanuel, 61200 Argentan (FR)
(86) Numéro de dépôt international: PCT/FR2022/000068
(87) Numéro de publication internationale: WO 2023/012410

(56) Documents cités:
- DE-A1- 102010 047 361
- US-A1- 2019 039 330

## Description

La présente invention concerne une machine d'enroulement filamentaire pour enrouler au moins une fibre continue sur un corps, en particulier sur un liner pour la fabrication de réservoirs, ainsi qu'un procédé de fabrication d'une pièce renforcée de fibres comprenant l'enroulement filamentaire d'au moins une fibre continue sur un corps au moyen d'une telle machine.

Il est connu des réservoirs composites destinés au stockage de gaz sous pression présentant généralement une portion centrale cylindrique et deux portions d'extrémités de section décroissante, bombées vers l'extérieur, classiquement appelées dômes. Dans le cas de réservoirs de type IV, les réservoirs sont formés d'une enveloppe intérieure, classiquement appelé liner, définissant une chambre de stockage étanche, et une enveloppe de renforcement, entourant le liner, qui est obtenue par enroulement filamentaire de fibres continues autour du liner, les fibres étant de préférence pré-imprégnées d'une résine, généralement de résine thermodurcissable, chaque fibre étant formée d'une multitude de filaments continus.

L'enroulement filamentaire est effectué au moyen d'une machine d'enroulement filamentaire qui comprend classiquement des moyens d'enroulement comprenant au moins une tête d'enroulement associée à des moyens de stockage de fibre, et un système de déplacement apte à entrainer en rotation le liner autour de son axe longitudinal, et à effectuer un déplacement relatif du liner par rapport aux moyens d'enroulement pour l'enroulement de fibre sur ledit liner.

Il est connu notamment par le document brevet DE 10 2010 047 361 une telle machine dans laquelle les moyens d'enroulement comprennent une tête d'enroulement montée rotative autour d'un axe horizontal sur un bâti fixe. Les fibres, provenant de bobines de fibres disposées dans cantre, sont guidées sont la forme d'une nappe vers la tête d'enroulement, en passant au préalable dans un système d'imprégnation formé d'un bain de résine. Le système de déplacement comprend un robot de type bras poly-articulé portant en extrémité un dispositif préhenseur. Le dispositif préhenseur comprend un support en U monté par sa base au poignet du robot, le liner étant monté par ses extrémités entre les deux branches du U et entraîné en rotation par une de ses extrémités par un moteur.

Ce type de machine avec un robot portant le liner permet de proposer une machine d'enroulement filamentaire compacte, simple de conception, et à faible coûts, en utilisant des robots standards, classiquement utilisés dans le secteur automobile. Le robot permet de charger aisément un liner pour l'opération d'enroulement filamentaire et de transférer aisément le liner renforcé obtenu après enroulement vers un autre poste de traitement.

Le changement des bobines de fibre nécessite un arrêt de la machine, ce qui réduit considérablement les cadences de production de la machine.

Le but de la présente invention est de proposer une machine d'enroulement permettant la fabrication de pièces par enroulement à des cadences importantes.

A cet effet, la présente invention propose une machine d'enroulement filamentaire pour enrouler au moins une fibre continue sur un corps présentant un axe longitudinal principal, ladite machine comprenant
- des moyens d'enroulement comprenant au moins une tête d'enroulement associée à des moyens de stockage de fibre, et
- un système de déplacement apte à entraîner en rotation un corps autour de son axe longitudinal et à effectuer un déplacement relatif du corps par rapport aux moyens d'enroulement pour l'enroulement de fibre sur ledit corps,
caractérisée en ce que les moyens d'enroulement comprennent un support tournant ou carrousel, monté rotatif autour d'un axe de rotation, sur une structure fixe, sur lequel sont montés au moins deux systèmes d'enroulement, chaque système d'enroulement comprenant une tête d'enroulement associée à des moyens de stockage, de sorte que, par rotation dudit support tournant autour de son axe de rotation, chaque système d'enroulement puisse être déplacé dans une position active pour l'enroulement de fibre par sa tête d'enroulement et une position inactive dans laquelle un opérateur peut effectuer des opérations de maintenance.

Selon l'invention, la machine d'enroulement comprend un carrousel portant plusieurs systèmes d'enroulement, de sorte que lorsqu'un système d'enroulement est en cours d'utilisation pour des opérations d'enroulement, des opérations de maintenance, en particulier des changements de bobines de fibre, peuvent être réalisées en temps masqué sur le ou les autres systèmes d'enroulement. La machine selon l'invention permet ainsi d'obtenir des cadences de production élevées. La machine selon l'invention s'avère particulièrement avantageuse pour la réalisation de réservoirs haute pression, avec un corps constituant le liner du réservoir.

Selon un mode de réalisation, le support tournant est monté rotatif autour d'un axe de rotation vertical.

Selon un mode de réalisation, le support tournant comprend n systèmes d'enroulement, n étant un nombre entier supérieur ou égal à 2, les systèmes d'enroulement étant disposés sur le support tournant à espace angulaire régulier égal à 360°/n.

Selon un mode de réalisation, ledit support tournant porte deux systèmes d'enroulement, chacun déplaçable entre une position active et une position inactive, la manœuvre de chaque système d'enroulement entre ses deux positions, étant réalisée par une rotation de 180° et/ou - 180° du support tournant autour de son axe de rotation entre deux positions, une première position dans laquelle le premier système d'enroulement et le deuxième système d'enroulement sont respectivement en position active et en position inactive, et une deuxième position dans laquelle le premier système d'enroulement et le deuxième système d'enroulement sont respectivement en position inactive et en position active.

Selon un mode de réalisation, ledit support tournant porte un premier, deuxième et troisième systèmes d'enroulement, chacun déplaçable entre une position active et deux position inactives, la manœuvre de chaque système d'enroulement entre ses trois positions, étant réalisée par des rotations de +120° et/ou -120°, du support tournant autour de son axe de rotation, entre trois positions
- une première position dans laquelle le premier, deuxième et troisième systèmes d'enroulement sont respectivement dans une position active, une deuxième position inactive et une première position inactive ;
- une deuxième position dans laquelle le premier, deuxième et troisième systèmes d'enroulement sont respectivement dans une première position inactive, une position active, et une deuxième position active,
- une troisième position dans laquelle le premier, deuxième et troisième systèmes d'enroulement sont respectivement dans une deuxième position inactive, une première position inactive, et une position active, au moins l'une des deux positions inactives de chaque système d'enroulement, de préférence les deux positions inactives, correspondent à des positions de maintenance dans lesquelles un opérateur peut effectuer des opérations de maintenance.

Selon un autre mode de réalisation, le support tournant est monté rotatif autour d'un axe de rotation horizontal.

Selon un mode de réalisation, chaque tête d'enroulement comprend un organe de guidage, tel qu'un œillet ou un ou plusieurs rouleaux ou poulies, de préférence monté pivotant sur ledit support tournant autour d'un axe de rotation, de préférence horizontal, chaque système d'enroulement comprenant un moteur apte à faire pivoter son organe de guidage autour de son axe de rotation.

Selon un mode de réalisation, les moyens de stockage de chaque système d'enroulement comprennent des mandrins montés sur une structure support, chaque mandrin étant apte à porter une bobine de fibre, et est associé à un système de régulation de tension, chaque système d'enroulement comprenant des moyens de guidage aptes à guider les fibres depuis les mandrins vers la tête d'enroulement pour former une nappe de fibres au niveau de la tête.

Selon un mode de réalisation, chaque système d'enroulement comprend plusieurs têtes d'enroulement par exemple deux ou trois tête d'enroulement, chacune associée à des moyens de stockage de fibre, par exemple disposées les unes au-dessus des autres avec les axes de rotation disposés dans un même plan vertical, la machine comprenant alors de préférence un système de déplacement apte à entraîner en rotation plusieurs corps, dont le nombre correspond au nombre de tète d'enroulement de chaque système d'enroulement, et à effectuer un déplacement relatif des corps par rapport aux moyens d'enroulement pour l'enroulement simultané de fibre sur lesdits corps.

Selon un mode de réalisation, le système de déplacement comprend un premier robot polyarticulé et un deuxième robot polyarticulé aptes à porter ledit corps par ses extrémités, de sorte que le corps est monté rotatif autour de son axe de rotation longitudinal par une première extrémité au premier robot polyarticulé et par une deuxième extrémité au deuxième robot polyarticulé, au moins l'un des deux robots poly-articulés étant équipé d'un moteur d'entraînement pour l'entrainement en rotation dudit corps autour de son axe longitudinal. Un tel système de déplacement à deux robots permet de porter des corps de dimensions importantes tout en garantissant des vitesses et accélérations de déplacement importantes et donc des cadences de production élevées, ainsi qu'un cout raisonnable tant en matériel qu'en installation. Par ailleurs, un tel système de déplacement permet un déplacement précis dans les trois dimensions du corps résultant en une bonne qualité d'enroulement. La machine s'avère particulièrement avantageuse pour la réalisation de réservoirs haute pression, avec un corps constituant le liner du réservoir.

Selon un mode de réalisation, chaque robot polyarticulé est équipé d'un dispositif de montage comprenant une platine support assemblée au poignet d'extrémité du robot polyarticulé et portant un mandrin de serrage, de préférence automatique, apte à serrer une extrémité tubulaire d'un corps, le mandrin de serrage du premier et/ou du deuxième robot poly-articulé étant raccordé à un moteur d'entrainement pour l'entrainement en rotation du corps autour de son axe longitudinal.

Selon un mode de réalisation, au moins l'un des deux mandrins est monté sur sa platine support avec un ou plusieurs degrés de liberté pour éviter tout problème d'hyperstatisme lorsque le corps est assemblé aux deux dispositifs de montage.

Selon un mode de réalisation, chaque mandrin de serrage est monté sur la platine support de sorte que l'axe longitudinal du mandrin de serrage soit disposé perpendiculairement au dernier axe de rotation du poignet du robot polyarticulé, les dispositifs de montage étant ainsi aptes à porter un corps de sorte que l'axe longitudinal du corps soit disposé perpendiculairement aux derniers axes des robots polyarticulés. Ce type de montage permet un déplacement tridimensionnel optimisé du corps pour les opérations d'enroulement filamentaire, et pour la prise et la dépose du corps à l'opposé des moyens d'enroulement par rapport au robot.

Selon un mode de réalisation, les mandrins de serrage du premier et du deuxième robot poly-articulés sont chacun raccordés à un moteur d'entrainement pour l'entrainement en rotation du corps autour de son axe longitudinal. La motorisation de chaque mandrin de serrage permet, dans le cas de liner, d'éviter une torsion du liner lors des opérations d'enroulement

Selon un autre mode de réalisation, lorsque chaque système d'enroulement comprend plusieurs tête d'enroulement, tel que décrit précédemment, le système de déplacement est apte à porter plusieurs corps, de chaque robot polyarticulé comprenant une platine avec une deuxième plaque sur laquelle sont montés les uns au-dessus des autres plusieurs mandrins de serrage, chaque corps étant assemblé par une extrémité à un mandrin de serrage du premier robot polyarticulé et à un mandrin de serrage du deuxième robot polyarticulé.

Selon un mode de réalisation, le système de déplacement comprend un premier robot polyarticulé et un deuxième robot polyarticulé chacun formé d'un robot de type 6 axes. De tels robots 6 axes assurent un déplacement optimal du corps pour l'enroulement et pour la prise et la dépose du corps à l'opposé des moyens d'enroulement par rapport au robot.

Selon un mode de réalisation, le premier robot polyarticulé et le deuxième robot polyarticulé sont montés coulissant par leur embase sur un rail, de manière à pouvoir adapter l'entraxe entre les deux robots, en particulier entre leurs premiers axes de rotation verticaux, à la longueur du corps.

Selon un mode de réalisation, les moyens d'enroulement sont disposés d'un premier côté du système de déplacement, la machine comprenant en outre un banc de chargement et de déchargement disposés du deuxième côté du système de déplacement qui est opposé aux moyens d'enroulement, depuis lequel le système de déplacement est apte à saisir un corps et sur lequel ledit système de déplacement est apte à déposer un corps, ledit banc étant de préférence apte à recevoir au moins deux corps.

La présente invention a également pour objet une installation d'enroulement filamentaire caractérisé en ce qu'elle comprend plusieurs machines telles que décrite précédemment, disposées côté à côte, et un système de transfert comprenant un robot polyarticulé monté mobile en translation sur un rail , et équipé d'un dispositif préhenseur apte à saisir un corps depuis les bancs de chargement et de déchargement des machines d'enroulement et à déposer un corps sur lesdits bancs de chargement et de déchargement, ledit système de transfert comprenant en outre de préférence un banc d'entrée et un banc de sortie, ledit rail étant disposé du côté des bancs de chargement et de déchargement des machines d'enroulement qui est opposé aux systèmes de déplacement des machines d'enroulement,

La présente invention a également pour objet un procédé de fabrication d'une pièce renforcée de fibres comprenant l'enroulement filamentaire d'au moins une fibre continue sur un corps, caractérisé en ce que l'enroulement filamentaire est réalisé au moyen d'une machine d'enroulement filamentaire ou d'une installation, telles que décrites précédemment.

Selon un mode de réalisation du procédé, pour la réalisation d'une pièce renforcée de fibre telle qu'un réservoir haute pression, le corps constitue un liner, la pièce renforcée de fibres étant formée du liner et de l'enroulement de fibre, le liner comprend de préférence une portion centrale sensiblement cylindrique et des première et deuxième portion d'extrémité bombées en forme de dômes, ledit liner étant équipé en extrémité de broche pour son montage aux extrémités des deux robots polyarticulés.

Selon d'autre mode de réalisation, le corps constitue un mandrin, la pièce renforcée de fibres étant formée de l'enroulement de fibre.

L'invention sera mieux comprise, et d'autres buts, détails, caractéristiques et avantages apparaîtront plus clairement au cours de la description explicative détaillée qui va suivre de deux modes de réalisation particuliers actuellement préférés de l'invention, en référence aux dessins schématiques annexés, sur lesquels :
- la Figure 1 est une vue schématique en perspective d'une machine d'enroulement filamentaire selon l'invention, lors de l'opération d'enroulement de fibres sur un corps porté par les deux robots ;
- la Figure 2 est une vue en perspective analogue à celle de la figure 1, lors d'une opération de déchargement du corps ;
- la Figure 3 est une vue de dessus de la machine de la figure 1 ;
- la Figure 4 est une vue de côté de la machine de la figure 1 ;
- la Figure 5 est une vue schématique de dessus d'une installation comprenant plusieurs machines d'enroulement filamentaire ;
- la Figure 6 est une vue schématique en perspective d'une machine d'enroulement filamentaire selon un deuxième mode de réalisation l'invention ; et
- la Figure 7 et la Figure 8 sont respectivement une vue de dessus et une vue de côté de la machine de la figure 6.

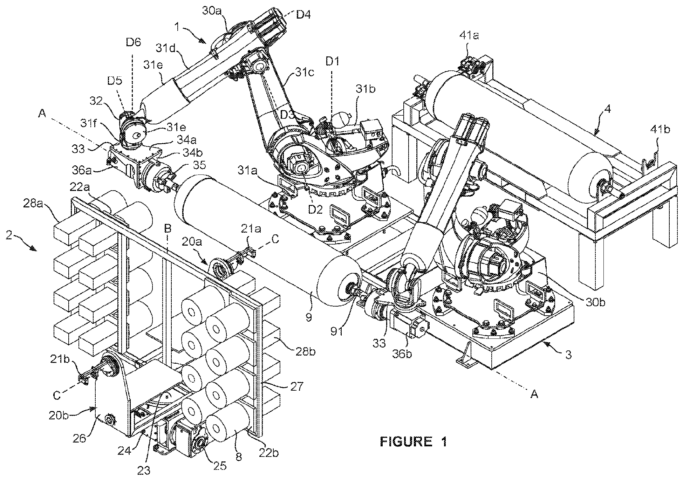

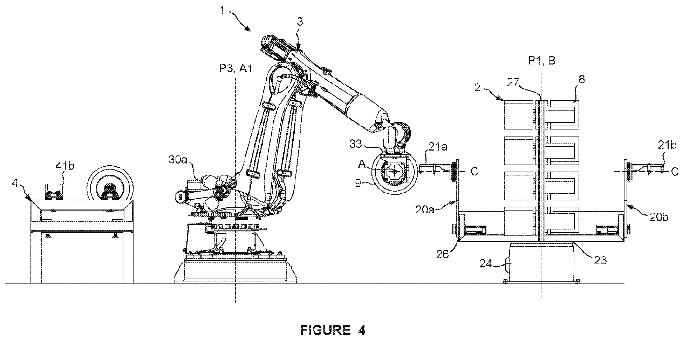

En référence aux figures 1 à 4, la machine d'enroulement filamentaire 1 selon l'invention est utilisée ici pour l'enroulement de plusieurs fibres sous la forme d'une nappe sur corps formé d'un liner 9 pour la production de réservoirs. Le liner présente un axe A longitudinal principal et comprend une portion centrale cylindrique et deux dômes en extrémité équipés de broches 91 de montage.

La machine d'enroulement comprend des moyens d'enroulement 2, un système de déplacement 3 portant le liner 9, et un banc ou station de chargement et de déchargement 4.

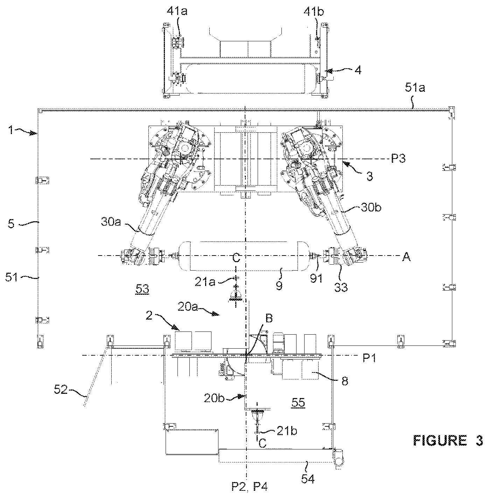

Les moyens d'enroulement 2 comprennent un premier système d'enroulement 20a et un second système d'enroulement 20b montés sur un support tournant ou carrousel 23. Le carrousel 23 est monté rotatif autour d'un axe de rotation B vertical sur un bâti 24 fixé au sol, et est apte à être entraîné en rotation par un moteur 25 piloté par une unité de commande de la machine. Les deux systèmes d'enroulement 20a, 20b sont disposés de part et d'autre d'un premier plan P1 (Fig. 3) vertical passant par l'axe B. Chaque système d'enroulement comprend une tête d'enroulement associée à des moyens de stockage de fibres.

Le premier système d'enroulement 20a, disposé d'un premier côté du plan P1 du carrousel, comprend une première tête d'enroulement 21a associée à des premiers moyens de stockage 22a. La première tête d'enroulement comprend un organe de guidage formé ici d'un rouleau de dépose monté rotatif autour d'un axe horizontal C sur un premier support 26a fixé sur le carrousel, ledit premier support 26a s'étendant depuis le plan P1 pour écarter la tête d'enroulement dudit plan P1. Les premiers moyens de stockage 22a comprennent des mandrins pour recevoir des bobines de fibres continues. La machine est prévue ici pour permettre l'enroulement d'une nappe formée de 8 fibres, les premiers moyens de stockage comprennent ainsi huit mandrins. Les mandrins sont montés sur un cadre support 27 fixé sur le carrousel, sensiblement selon le plan P1. Le premier système d'enroulement comprend en outre des premiers moyens de guidage (non représentés), connus en soi, permettant de guider les fibres déroulées depuis les bobines vers l'organe de guidage sous la forme d'une nappe dans laquelle les fibres sont sensiblement disposées bord à bord. Le premier système d'enroulement comprend un système de régulation de tension 28a pour réguler la tension de chaque fibre de la nappe, comprenant des premiers moteurs de régulation de tension associés auxdits premiers mandrins, ces premiers moteurs étant positionnés du deuxième côté du carrousel. La première tête d'enroulement 21a est plus écartée du plan P1 que les mandrins 22a pour libérer un espace entre la première tête et le plan P1 permettant le guidage des fibres sous la forme d'une nappe jusqu'à l'organe de guidage.

La machine peut être utilisée avec des bobines de fibres pré-imprégnées de résine. Lorsque les bobines de fibres sont munies d'un film support, les moyens de stockage peuvent comprendre des mandrins de rembobinage pour le rembobinage du film support sur un rouleau au fur et à mesure du déroulement de la bobine de fibre. La machine peut également être utilisée avec des bobines de fibre sèche, le premier système d'enroulement étant alors équipé d'un système d'application de résine pour appliquer en ligne de la résine sur les fibres en cours d'opération d'enroulement. Le système d'imprégnation comprend par exemple un bain d'imprégnation de résine disposé dans l'espace entre le plan P1 et la première tête d'enroulement, pour un procédé d'enroulement dit par voie humide.

Le deuxième système d'enroulement 20b est identique au premier système d'enroulement 20a, et comprend une deuxième tête d'enroulement 21b montée pivotante autour d'un axe C horizontal sur un deuxième support 26b, des deuxièmes moyens de stockage 22b comprenant des deuxièmes mandrins associés à des deuxièmes moteur de régulation de tension 28b, des moyens de guidage (non représentés), et éventuellement un système d'application de résine. Les deuxièmes mandrins sont montés sur le même cadre support 27, les deuxièmes moteurs de régulation de tension 28b étant positionné du premier côté du carrousel.

Dans le présent mode de réalisation, la première tête d'enroulement et la deuxième tête d'enroulement sont disposées de part et d'autre d'un plan P2 passant par l'axe B, et perpendiculaire au plan P1, les têtes étant disposées entre le plan P2 et leurs moyens de stockage respectifs.

Le système de déplacement 3 comprend deux bras ou robots poly-articulés 30a, 30b pour porter le liner, les robots poly-articulés étant équipés en extrémité d'un dispositif de montage 33 pour le montage du liner par ses broches d'extrémité 91 aux deux robot poly-articulés.

Chaque robot poly-articulé est du type robot six axes, connu en soi, monté fixe au sol, un dispositif de montage 33 étant assemblé au poignet d'extrémité 32 du robot poly-articulé. En référence à la figure 1, chaque robot poly-articulé, comprend différents tronçons 31a-31g montés pivotant les uns aux autres autour d'axes de rotation D1-D6, le premier tronçon ou embase 31a étant fixé au sol, le deuxième tronçon 31b étant monté mobile sur l'embase 31a autour d'un axe D1 vertical, le tronçon d'extrémité 31g forme une platine d'assemblage pour l'assemblage du dispositif de montage selon le dernier axe de rotation D6, appelé également axe d'assemblage. Les trois derniers tronçons 31e, 31f, et 31g constituent le poignet 32 d'extrémité du robot monté rotatif autour de l'axe D4.

Le dispositif de montage 33 comprend une platine support en L comprenant une première plaque 34a par laquelle le dispositif est monté au poignet 32 et une deuxième plaque 34b, perpendiculaire à la première plaque, portant un mandrin de serrage 35, par exemple un mandrin de tour, connu en soi, à trois mors, à serrage automatique, par exemple de type pneumatique, permettant de serrer et desserrer automatiquement la broche d'un liner. Le mandrin de serrage monté sur la deuxième plaque présente un axe de mandrin perpendiculaire au dernier axe D6 du robot. Le mandrin de serrage 35 est raccordé à un moteur d'entrainement 36a, 36b, disposé sous la première plaque 34a de la platine et piloté par l'unité de commande de la machine, pour l'entrainement en rotation du liner autour de son axe A. De préférence, le premier robot 30a comprend un premier moteur d'entraînement maître, piloté par l'unité de commande, et le deuxième robot 30b comprend un deuxième moteur d'entraînement esclave, synchronisé avec le moteur d'entraînement maître.

Les deux robots poly-articulés sont fixés au sol, l'un à côté de l'autre. En référence à la figure 3, le carrousel 23 portant les deux systèmes d'enroulement est disposé d'un premier côté du plan référencé P3 passant par les premiers axes D1 des robots. Dans ce mode de réalisation, l'axe B est disposé dans le plan vertical médian P4 qui est disposé à équidistance des axes D1, perpendiculairement au plan P3.

Le banc de chargement et de déchargement 4 est disposé à l'opposé du carrousel par rapport aux deux robots poly-articulés, du deuxième côté du plan P3. Le banc comprend une structure posée ou fixée au sol et permet de recevoir deux liners, avec les axes B des liners disposés parallèlement au plan P3, la structure comprenant pour chaque liner deux systèmes de réception 41a, 41b sur lesquelles un liner peut être posé par ses broches d'extrémité.

Le carrousel est déplaçable entre deux positions par une rotation de +180° ou -180° autour de son axe B. Dans une première position du carrousel illustrée aux figures 1, 3 et 4, le premier système d'enroulement 20a est dans une position active, sa tête peut être utilisée pour des opérations d'enroulement filamentaire sur un liner porté par les deux robots poly-articulés. Le deuxième système d'enroulement 20b est dans une position inactive correspondant à une position de maintenance. Dans cette position du carrousel, le plan P1 est parallèle au plan P3, les plans P2 et P4 étant confondus.

L'opération d'enroulement est réalisée par l'unité de commande de la machine qui pilote les deux robots poly-articulés selon des trajectoires programmées pour déplacer le liner par rapport à la tête d'enroulement 20a, ainsi que les moteurs d'entraînement 36a, 36b pour la rotation du liner autour de son axe A, et le moteur pour la rotation de la tête 20a autour de son axe C de rotation.

Pendant les opérations d'enroulement avec le premier système d'enroulement, un opérateur peut effectuer des opérations de maintenance en toute sécurité sur le deuxième système d'enroulement en position de maintenance. L'opérateur peut notamment remplacer les bobines du deuxième système d'enroulement, et passer les fibres des nouvelles bobines dans les moyens de guidage jusqu'à l'organe de guidage. L'opérateur peut également effectuer des opérations de nettoyage et/ou de remplacement de galets et/ou rouleaux de la deuxième tête et/ou des moyens de guidage, et/ou des opérations sur le système d'application de résine.

Lorsqu'il est nécessaire de changer les bobines du premier système d'enroulement, le carrousel est amené dans sa deuxième position, par rotation de 180° autour de son axe C, en pilotant le moteur 25 via l'unité de commande de la machine. Dans cette deuxième position, le deuxième système d'enroulement 20b est en position active pour permettre d'effectuer des opérations d'enroulement via sa tête d'enroulement 21b, tandis que le premier système d'enroulement est en position de maintenance pour les opérations de maintenance, notamment le changement de bobines.

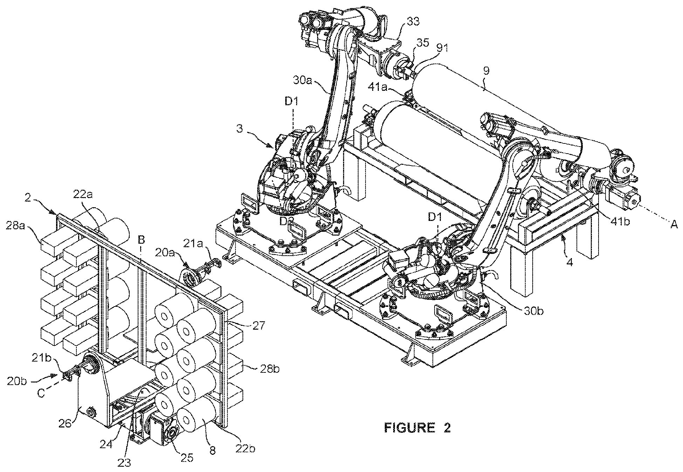

A l'issue de l'opération d'enroulement filamentaire d'un liner, le liner est déplacé par les deux robots poly-articulés du côté du plan P3 opposé au système de d'enroulement, pour déposer le liner sur les systèmes de réception du banc tel qu'illustré à la figure 2. Les mandrins de serrage 35 automatiques des dispositifs de montage sont alors pilotés pour desserrer les broches, et les robots poly-articulés sont pilotés pour déplacer les mandrins de serrage selon un mouvement de translation vers l'extérieur, parallèlement à l'axe A du liner, et ainsi libérer les broches des mandrins de serrage 35. Les robots poly-articulés peuvent alors être pilotés pour saisir un nouveau liner posé sur le banc et le basculer devant le système d'enroulement pour une nouvelle opération d'enroulement.

Comme représenté sur la figure 3, la machine comprend avantageusement une enceinte de sécurité 5, comprenant une barrière 51 entourant les robots poly-articulés 30a, 30b et les moyens d'enroulement 2, avec une première porte 52 pour accéder à première zone 53 dans laquelle sont positionnés les robots et le système d'enroulement en position active, et une deuxième porte 54 pour accéder à une deuxième zone 55 dans laquelle est positionné le système d'enroulement en position de maintenance. La barrière entoure les moyens d'enroulement, au plus proche du cadre support, tout en permettant la rotation du carrousel, de sorte qu'un opérateur accédant par la deuxième porte au système d'enroulement en position de maintenance dans la première zone ne puisse accéder au système d'enroulement en position active dans la première zone. La portion 51a de barrière entre les robots et le banc 4 présente une hauteur réduite pour permettre le chargement du liner depuis le banc et le déchargement du liner sur le banc avec les robots.

Selon un autre mode de réalisation, le carrousel et les robots poly-articulés sont disposés au sol en décalant l'axe B par rapport au plan P4, de sorte que la tête du système d'enroulement en position active soit disposée selon le plan P4, son axe C de rotation disposée selon le plan P4.

Selon un autre mode de réalisation, les deux systèmes d'enroulement sont disposés symétriquement sur le carrousel de part et d'autre du plan P1, les axes C de rotation des deux systèmes d'enroulement étant confondus.

Selon un mode de réalisation, les deux robots poly-articulés sont montés coulissant par leur embase sur un rail, de manière à pouvoir adapter l'entraxe entre les axes D1 des robots en fonction de la longueur des liners, l'entraxe étant de préférence figé lors des opérations d'enroulement, en bloquant en position les embases des robots sur le rail.

Avantageusement, le premier système d'enroulement et le deuxième système d'enroulement comprennent chacun un dispositif d'attache automatique, permettant d'attacher automatiquement sans intervention manuelle la fibre ou la nappe de fibres sur le corps en début d'enroulement filamentaire, et un dispositif de coupe automatique, permettant de coupe automatiquement la fibre ou la nappe de fibres en fin d'enroulement.

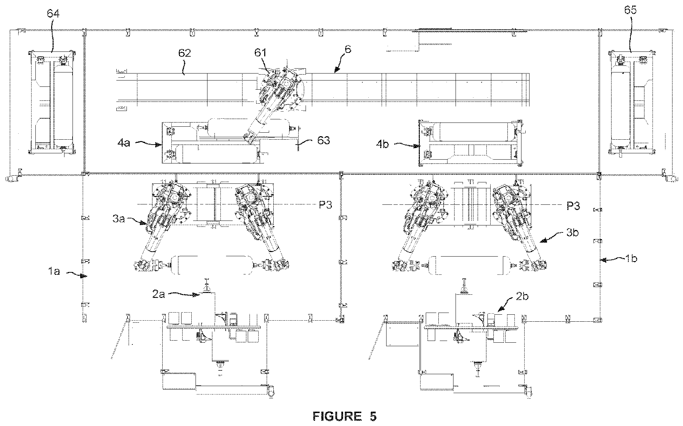

La figure 5 illustre une installation d'enroulement comprenant deux machines d'enroulement 1a, 1b telles que décrites précédemment, comprenant chacune un système de déplacement 3a, 3b à deux robots, des moyens d'enroulement 2a, 2b comprenant un carrousel portant deux systèmes d'enroulement, un banc de chargement et déchargement 4a, 4b. les deux machines 1a, 1b sont disposées côte à côte, les plans P3 des machines étant confondus. L'installation comprend en outre un système de transfert 6, comprenant un robot poly-articulé, appelé robot de transfert 61, de type robot 6 axes, monté sur un rail 62 linéaire disposé parallèlement au plan P3, du côté des bancs 4a, 4b qui est opposé aux robots poly-articulés des machines d'enroulement. Le robot de transfert est équipé à son poignet d'un dispositif préhenseur 63 apte à saisir automatiquement des liners par leur broches d'extrémité. L'installation comprend en outre un premier banc d'entrée 64 à une première extrémité du rail, destiné à recevoir des liners, et un deuxième banc de sortie 65, destiné à recevoir les liners renforcés, obtenus après l'opération d'enroulement filamentaire. Les bancs d'entrée et de sortie sont par exemple identiques aux bancs 4a, 4b des machines d'enroulement, et peuvent recevoir deux liners. Le robot de transfert est utilisé pour saisir des liners depuis le banc d'entrée et les déposer sur les bancs des machines d'enroulement, et saisir des liners renforcés des bancs des machines d'enroulement pour les déposer sur le banc de sortie. Cette installation permet de gérer efficacement les flux de liners, et de liners renforcés et d'obtenir des cadences de production élevées.

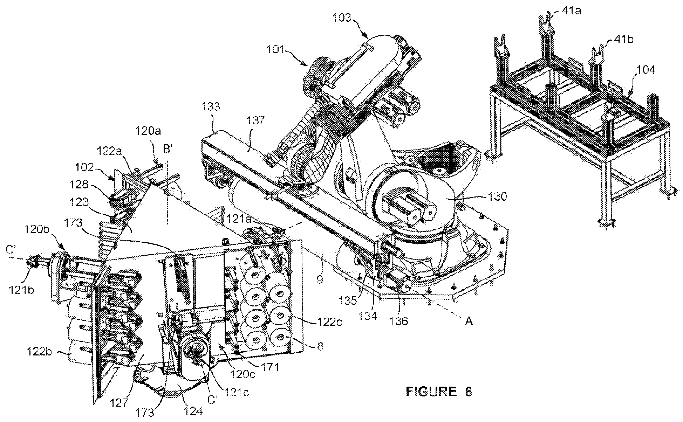

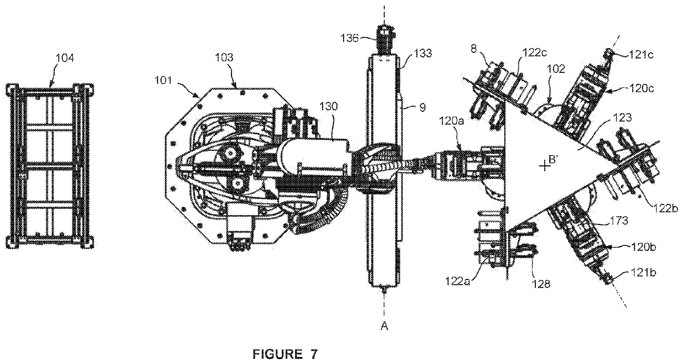

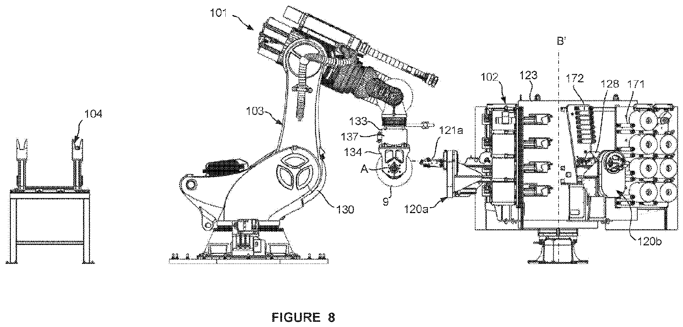

Les figures 6 à 8 illustrent une machine 101 d'enroulement filamentaire selon un deuxième mode de réalisation comprenant des moyens d'enroulement 102, un système de déplacement 103 portant le liner 9, et un banc de chargement et de déchargement 104.

Les moyens d'enroulement 102 comprennent ici trois systèmes d'enroulement montés sur un support tournant ou carrousel 123, à savoir un premier, deuxième et troisième systèmes d'enroulement référencés respectivement 120a, 120b et 120c. Le carrousel 123 est monté rotatif autour d'un axe de rotation B' vertical sur un bâti 124 fixé au sol, et est apte à être entraîné en rotation par un moteur (non représenté) piloté par une unité de commande de la machine. Le carrousel comprend une structure support 127 triangulaire définissant trois faces latérales disposées à 120° les uns des autres, un système d'enroulement est monté sur chaque face. Chaque système d'enroulement comprend une tête d'enroulement 121a-c associée à des moyens de stockage de fibres 122a-c. Chaque tête d'enroulement comprend un organe de guidage formé ici de plusieurs ensembles de poulies, d'un rouleau intermédiaire et d'un rouleau terminal de dépose, tous montés sur un bras, ledit bras étant monté rotatif autour d'un axe horizontal C'sur un support 126 fixé sur le carrousel, ledit support s'étendant vers l'extérieur depuis une face, les axes C' étant disposés à 120° les uns des autres. Chaque fibre passe une sur poulie de chaque ensemble, puis sur le rouleau intermédiaire et le rouleau final de dépose. Dans le mode illustré, les têtes d'enroulement sont centrées sur les faces, et s'étendent radialement vers l'extérieur, les axe C' passant par l'axe B'. Selon un autre mode de réalisation, les têtes sont décalées sur un côté d'une face latérale de la structure support. Pour chaque système d'enroulement, les moyens de stockage comprennent des mandrins pour recevoir des bobines de fibres continues. Les mandrins sont montés sur une plaque support assemblée à une face. Chaque mandrin est associé à un moteur de régulation de tension 128. Des moyens de guidage, formés de rouleaux 171, 172 permettent de guider les fibres déroulées depuis les bobines vers l'organe de guidage, les fibres étant au niveau du rouleau final de dépose sous la forme d'une nappe dans laquelle les fibres sont sensiblement disposées bord à bord. Chaque système d'enroulement comprend ici un système d'application de résine 173 formé par un bain d'imprégnation de résine disposé dans l'espace entre le plan P1 et la tête d'enroulement.

Le système de déplacement 103 comprend un robot poly-articulé 130 pour porter le liner 9, le poignet du robot poly-articulé étant équipé en extrémité d'un dispositif préhenseur 133 pour porter le liner par ses broches d'extrémité. Le robot poly-articulé est ici un robot six axes fixé au sol par son embase. Le dispositif préhenseur 133 comprend une poutre 137 assemblée au poignet portant du côté opposé au poignet deux platines 134 support en L. Chaque platine comprend une première plaque par laquelle elle est monté à la poutre et une deuxième plaque, perpendiculaire à la première portant un mandrin de serrage 135, similaire de celui décrit précédemment permettant de serrer et desserrer automatiquement la broche d'un liner, les axes de mandrin étant disposés parallèlement à la poutre, perpendiculaire au dernier axe D6 du robot. Les deux platines sont écartées l'une de l'autre le long de la poutre. Avantageusement, au moins l'une des platines, de préférence les deux platines, sont montées coulissantes par leur première plaque sur la poutre pour pouvoir adapter leur écartement à la longueur du liner, et pour permettre une prise et une pose automatique des liners. Le déplacement en translation de chaque platine sur la poutre est assuré par un moteur piloté par l'unité de commande de la machine. L'un des deux mandrins 135 est raccordé à un moteur d'entrainement 136 piloté par l'unité de commande de la machine, pour l'entrainement en rotation du liner autour de son axe A. en variante chaque mandrin est raccordé à un moteur d'entrainement.

Le banc 104, disposé à l'opposé du carrousel par rapport au robot polyarticulé, peut recevoir deux liners, et comprend pour chaque liner deux systèmes de réception 41a, 41b, formés ici de fourches, dont le positionnement sur le banc peut être adapté à la longueur des liners, tel qu'illustré sur la figure 6.

Le carrousel est déplaçable entre trois positions par des rotations de +120° ou -120° autour de son axe B' pour déplacer chaque système de déplacement entre une position active et deux positions inactives. Dans une première position du carrousel illustrée aux figures 6 à 8, le premier système d'enroulement 120a est dans une position active, sa tête peut être utilisée pour des opérations d'enroulement filamentaire sur un liner porté par le robot poly-articulé. Le deuxième système d'enroulement 120b et le troisième système d'enroulement 120c sont respectivement dans une deuxième position inactive, et une première position inactive dans lesquelles des opérations de maintenance, telles que décrites précédemment, peuvent être effectuées.

Une rotation de +120° (dans le sens horaire) permet d'amener le carrousel dans une deuxième position dans laquelle les premier, deuxième et troisième systèmes d'enroulement sont respectivement en première position inactive, en position active, et en deuxième position inactive.

Une rotation supplémentaire de +120° permet d'amener le carrousel dans une troisième position dans laquelle, les premier, deuxième et troisième systèmes d'enroulement sont respectivement en deuxième position inactive, en première position inactive et en position active.

Les systèmes d'enroulement peuvent être utilisés pour des opérations d'enroulements les uns après les autres, par rotation successive de 120°, les systèmes d'enroulement pouvant être rechargés en nouvelles bobines lorsqu'ils sont positionnés en première position inactive et/ou en deuxième position inactive.

Selon un autre mode d'utilisation, la machine est utilisée pour effectuer sur le liner un enroulement de fibre de carbone puis un enroulement final de fibre de verre. Le premier système d'enroulement et le deuxième système d'enroulement sont par exemple utilisés pour effectuer des opérations d'enroulement de fibre de carbone, tandis que le troisième système est utilisé pour des opérations d'enroulement de fibre de verre.

## Revendications

1. Machine (1, 101) d'enroulement filamentaire pour enrouler au moins une fibre continue sur un corps (9) présentant un axe longitudinal (A) principal, ladite machine comprenant
- des moyens d'enroulement (2, 102) comprenant au moins une tête d'enroulement associée à des moyens de stockage de fibre, et
- un système de déplacement (3, 103) apte à entraîner en rotation un corps (9) autour de son axe longitudinal (A) et à effectuer un déplacement relatif du corps par rapport aux moyens d'enroulement pour l'enroulement de fibre sur ledit corps,
**caractérisée en ce que** les moyens d'enroulement (2, 102) comprennent un support tournant (23, 123)*l*, monté rotatif autour d'un axe de rotation (B, B'), sur lequel sont montés au moins deux systèmes d'enroulement (20a, 20b ; 120a, 120b, 120c), chaque système d'enroulement comprenant une tête d'enroulement (21a, 21b ; 121a, 12b, 121c) associée à des moyens de stockage (22a, 22b ; 122a, 122b, 122c ), de sorte que, par rotation dudit support tournant autour de son axe de rotation (B, B'), chaque système d'enroulement puisse être déplacé dans une position active pour l'enroulement de fibre par sa tête d'enroulement et une position inactive dans laquelle un opérateur peut effectuer des opérations de maintenance.

2. Machine d'enroulement filamentaire selon la revendication 1, **caractérisée en ce que** le support tournant (23, 123) est monté rotatif autour d'un axe de rotation (B, B') vertical.

3. Machine selon la revendication 1 ou 2, **caractérisée en ce que** ledit support tournant (23) porte deux systèmes d'enroulement (20a, 20b), chacun déplaçable entre une position active et une position inactive, la manœuvre de chaque système d'enroulement entre ses deux positions, étant réalisée par une rotation de 180° et/ou -180° du support tournant autour de son axe de rotation (23) entre deux positions.

4. Machine selon la revendication 1 ou 2, **caractérisée en ce que** ledit support tournant porte un premier, deuxième et troisième systèmes d'enroulement (120a, 120b, 120c), chacun déplaçable entre une position active et deux position inactives, la manœuvre de chaque système d'enroulement entre ses trois positions, étant réalisée par des rotations *de* +120° et/ou -120°, du support tournant autour de son axe de rotation (B'), entre trois positions.

5. Machine selon l'une des revendications 1 à 4, **caractérisée en ce que** chaque tête d'enroulement (21a, 21b ; 121a, 12b, 121c) comprend un organe de guidage monté pivotant sur ledit support tournant (23, 123) autour d'un axe de rotation (C, C') horizontal, chaque système d'enroulement comprenant un moteur apte à faire pivoter son organe de guidage autour de son axe de rotation.

6. Machine selon l'une des revendications 1 à 5, **caractérisée en ce que** le système de déplacement (3) comprend un premier robot polyarticulé (30a) et un deuxième robot polyarticulé (30b) aptes à porter ledit corps par ses extrémités, de sorte que le corps est monté rotatif autour de son axe de rotation (A) longitudinal par une première extrémité au premier robot polyarticulé (30a) et par une deuxième extrémité au deuxième robot polyarticulé, au moins l'un des deux robots poly-articulés étant équipé d'un moteur d'entraînement (36a, 36b) pour l'entrainement en rotation dudit corps autour de son axe longitudinal.

7. Machine selon l'une des revendications 1 à 6, **caractérisée en ce que** les moyens d'enroulement (2, 102) sont disposés d'un premier côté du système de déplacement (3, 103), la machine comprenant en outre un banc de chargement et de déchargement (4, 104) disposés du deuxième côté du système de déplacement qui est opposé aux moyens d'enroulement, depuis lequel le système de déplacement est apte à saisir un corps et sur lequel ledit système de déplacement est apte à déposer un corps.

8. Installation d'enroulement filamentaire **caractérisé en ce qu'**elle comprend plusieurs machines selon la revendication 7, disposées côté à côte, et un système de transfert (6) comprenant un robot polyarticulé monté mobile en translation sur un rail (62), et équipé d'un dispositif préhenseur (63) apte à saisir un corps depuis les bancs de chargement et de déchargement des machines d'enroulement et à déposer un corps sur lesdits bancs de chargement et de déchargement.

9. Procédé de fabrication d'une pièce renforcée de fibres comprenant l'enroulement filamentaire d'au moins une fibre continue sur un corps, **caractérisé en ce que** l'enroulement filamentaire est réalisé au moyen d'une machine d'enroulement filamentaire selon l'une des revendication 1 à 7 ou d'une installation selon la revendication 8.

10. Procédé selon la revendication 9, pour la réalisation d'une pièce renforcée de fibre telle qu'un réservoir haute pression, **caractérisé en ce que** le corps constitue un liner, la pièce renforcée de fibres étant formée du liner et de l'enroulement de fibre.

## Patentansprüche

1. Filamentwickelmaschine (1, 101) zum Aufwickeln mindestens einer Endlosfaser auf einen Körper (9) mit einer Hauptlängsachse (A), die Maschine umfassend
- Wickelmittel (2, 102), umfassend mindestens einen Wickelkopf, der mit Faserspeichermitteln verbunden ist, und
- ein Verschiebesystem (3, 103), das in der Lage ist, einen Körper (9) um seine Längsachse (A) zu drehen und eine relative Verschiebung des Körpers in Bezug auf die Wickelmittel zum Aufwickeln von Fasern auf den Körper durchzuführen,
**dadurch gekennzeichnet, dass** die Wickelmittel (2, 102) einen um eine Drehachse (B, B') drehbar montierten Drehträger (23, 123)/ umfassen, auf dem mindestens zwei Wickelsysteme (20a, 20b; 120a, 120b, 120c) montiert sind, wobei jedes Wickelsystem einen Wickelkopf (21a, 21b; 121a, 12b, 121c) umfasst, der mit Speichermitteln (22a, 22b ; 122a, 122b, 122c) verbunden ist, so dass durch Drehen des Drehträgers um seine Drehachse (B, B') jedes Wickelsystem in eine aktive Position zum Aufwickeln von Fasern über seinen Wickelkopf und eine inaktive Position, in der ein Bediener Wartungsarbeiten durchführen kann, bewegt werden kann.

2. Filamentwickelmaschine nach Anspruch 1, **dadurch gekennzeichnet, dass** der Drehträger (23, 123) um eine vertikale Drehachse (B, B') drehbar montiert ist.

3. Maschine nach Anspruch 1 oder 2, **dadurch gekennzeichnet, dass** der Drehträger (23) zwei Wickelsysteme (20a, 20b) trägt, die jeweils zwischen einer aktiven Position und einer inaktiven Position verschiebbar sind, wobei das Manövrieren jedes Wickelsystems zwischen seinen beiden Positionen durch eine Drehung des Drehträgers um 180° und/oder -180° um seine Drehachse (23) zwischen zwei Positionen erfolgt.

4. Maschine nach Anspruch 1 oder 2, **dadurch gekennzeichnet, dass** der Drehträger ein erstes, ein zweites und ein drittes Wickelsystem (120a, 120b, 120c) trägt, die jeweils zwischen einer aktiven Position und zwei inaktiven Positionen verschiebbar sind, wobei das Manövrieren jedes Wickelsystems zwischen seinen drei Positionen durch Drehungen des Drehträgers um +120° und/oder -120 um seine Drehachse (B') zwischen drei Positionen erfolgt.

5. Maschine nach einem der Ansprüche 1 bis 4, **dadurch gekennzeichnet, dass** jeder Wickelkopf (21a, 21b; 121a, 12b, 121c) ein auf dem Drehträger (23, 123) um eine horizontale Drehachse (C, C') schwenkbar montiertes Führungselement umfasst, wobei jedes Wickelsystem einen Motor umfasst, der in der Lage ist, sein Führungselement um seine Drehachse zu schwenken.

6. Maschine nach einem der Ansprüche 1 bis 5, **dadurch gekennzeichnet, dass** das Verschiebesystem (3) einen ersten mehrgelenkigen Roboter (30a) und einen zweiten mehrgelenkigen Roboter (30b) umfasst, die in der Lage sind, den Körper an seinen Enden zu tragen, so dass der Körper um seine Längsdrehachse (A) durch ein erstes Ende am ersten mehrgelenkigen Roboter (30a) und durch ein zweites Ende am zweiten mehrgelenkigen Roboter drehbar montiert ist, wobei mindestens einer der beiden mehrgelenkigen Roboter mit einem Antriebsmotor (36a, 36b) zum Drehantrieb des Körpers um seine Längsachse ausgestattet ist.

7. Maschine nach einem der Ansprüche 1 bis 6, **dadurch gekennzeichnet, dass** die Wickelmittel (2, 102) auf einer ersten Seite des Verschiebesystems (3, 103) angeordnet sind, wobei die Maschine ferner eine Be- und Entladebank (4, 104) umfasst, die auf der zweiten Seite des Verschiebesystems angeordnet ist, die den Wickelmitteln gegenüberliegt, wobei das Verschiebesystem in der Lage ist, einen Körper von dieser aus zu ergreifen, und das Verschiebesystem in der Lage ist, einen Körper auf dieser abzulegen.

8. Filamentwickelanlage, **dadurch gekennzeichnet, dass** sie mehrere nebeneinander angeordnete Maschinen nach Anspruch 7 und ein Transfersystem (6) umfasst, das einen mehrgelenkigen Roboter umfasst, der in Translation auf einer Schiene (62) beweglich montiert und mit einer Greifvorrichtung (63) ausgestattet ist, die in der Lage ist, einen Körper von den Be- und Entladebänken der Wickelmaschinen aus zu ergreifen und einen Körper auf den Be- und Entladebänken abzulegen.

9. Verfahren zur Herstellung eines faserverstärkten Teils, das das Filamentwickeln mindestens einer Endlosfaser auf einen Körper umfasst, **dadurch gekennzeichnet, dass** das Filamentwickeln mittels einer Filamentwickelmaschine nach einem der Ansprüche 1 bis 7 oder einer Anlage nach Anspruch 8 ausgeführt wird.

10. Verfahren nach Anspruch 9 zur Erstellung eines faserverstärkten Teils wie eines Hochdruckbehälters, **dadurch gekennzeichnet, dass** der Körper einen Liner bildet, wobei das faserverstärkte Teil aus dem Liner und der Faserwicklung gebildet wird.

## Claims

1. Filament winding machine (1, 101) for winding at least one continuous fiber onto a body (9) having a main longitudinal axis (A), said machine comprising
- winding means (2, 102) comprising at least one winding head associated with fiber storage means, and
- a displacement system (3, 103) able to rotate a body (9) around its longitudinal axis (A) and to perform a relative displacement of the body with respect to the winding means for winding fiber onto said body,
**characterized in that** the winding means (2, 102) comprise a rotating support (23, 123), mounted rotatably around a rotation axis (B, B'), on which are mounted at least two winding systems (20a, 20b; 120a, 120b, 120c), each winding system comprising a winding head (21a, 21b; 121a, 12b, 121c) associated with storage means (22a, 22b ; 122a, 122b, 122c ), so that, by rotation of said rotating support around its rotation axis (B, B'), each winding system can be moved into an active position for fiber winding via its winding head and an inactive position in which an operator can perform maintenance operations.

2. Filament winding machine according to claim 1, **characterized in that** the rotating support (23, 123) is mounted rotatably around a vertical rotation axis (B, B').

3. Machine according to claim 1 or 2, **characterized in that** said rotating support (23) carries two winding systems (20a, 20b), each movable between an active position and an inactive position, the maneuvering of each winding system between its two positions being achieved by a 180° and/or -180° rotation of the rotating support around its rotation axis (23) between two positions.

4. Machine according to claim 1 or 2, **characterized in that** said rotating support carries a first, second and third winding system (120a, 120b, 120c), each movable between an active position and two inactive positions, the maneuvering of each winding system between its three positions being achieved by +120° and/or -120° rotations of the rotating support around its rotation axis (B'), between three positions.

5. Machine according to one of claims 1 to 4, **characterized in that** each winding head (21a, 21b; 121a, 12b, 121c) comprises a guide member pivotally mounted on said rotating support (23, 123) around a horizontal rotation axis (C, C'), each winding system comprising a motor able to pivot its guide member around its rotation axis.

6. Machine according to one of claims 1 to 5, **characterized in that** the displacement system (3) comprises a first polyarticulated robot (30a) and a second polyarticulated robot (30b) able to carry said body by its ends, so that the body is rotatably mounted around its longitudinal rotation axis (A) by a first end to the first polyarticulated robot (30a) and by a second end to the second polyarticulated robot, at least one of the two polyarticulated robots being equipped with a drive motor (36a, 36b) for rotating said body around its longitudinal axis.

7. Machine according to one of claims 1 to 6, **characterized in that** the winding means (2, 102) are arranged on a first side of the displacement system (3, 103), the machine further comprising a loading and unloading bench (4, 104) arranged on the second side of the displacement system which is opposite to the winding means, from which the displacement system is able to grip a body and onto which said displacement system is able to deposit a body.

8. Filament winding installation **characterized in that** it comprises several machines according to claim 7, arranged side by side, and a transfer system (6) comprising a polyarticulated robot mounted mobile in translation on a rail (62), and equipped with a gripping device (63) able to grip a body from the loading and unloading benches of the winding machines and to deposit a body on said loading and unloading benches.

9. Method for manufacturing a fiber-reinforced part comprising filament winding of at least one continuous fiber onto a body, **characterized in that** the filament winding is carried out by means of a filament winding machine according to one of claims 1 to 7 or an installation according to claim 8.

10. Method according to claim 9, for producing a fiber-reinforced part such as a high-pressure vessel, **characterized in that** the body constitutes a liner, the fiber-reinforced part being formed by the liner and the fiber winding.
